# EUROPÄISCHE PATENTANMELDUNG

(11) **EP 2 463 735 A1**
(43) Veröffentlichungstag der Anmeldung: **13.06.2012**
(21) Anmeldenummer: 11009626.0
(22) Anmeldetag: 06.12.2011
(51) Int. Cl.: G05B 9/02, G05B 19/4067, H02J 9/06, G05B 19/406, G05B 19/042, G06F 1/30

(54) **Einrichtung zum Schutz von Werkstück und Werkzeug bei spanenden Werkzeugmaschinen**

(30) Priorität: 06.12.2010 DE 102010053724
(71) Anmelder: NILES-SIMMONS Industrieanlagen GmbH, 09117 Chemnitz (DE)
(72) Erfinder: Naumann, Hans, Prof., 09117 Chemnitz (DE); Werner, Dirk, 09355 Gersdorf (DE)
(74) Vertreter: Findeisen Hübner Neumann

(57) **Zusammenfassung**

Die Erfindung betrifft ein Verfahren und Komponenten zum Schutz von Werkstück und Werkzeug an spanenden Werkzeugmaschinen während der Bearbeitung bei Spannungsausfall. Dazu dient die Speicherung von elektrischer Energie in Kondensatoren. Diese gespeicherte elektrische Energie wird bei Spannungsausfall durch ein geeignetes Managementsystem genutzt, um Werkzeug und Werkstück voneinander zu trennen.

## Beschreibung

Die Erfindung betrifft eine Einrichtung zur Schadensverhütung an Maschinen bei einem Netzausfall, insbesondere zum Schutz der Werkstücke und Werkzeuge von spanenden Werkzeugmaschinen mit Haupt- und Nebenantrieben sowie Werkzeugschlitten, bei denen die bei einem Spannungsausfall notwendige Energie von gesonderten Baugruppen erzeugt und/oder gespeichert wird

Es sind bereits verschiedene Einrichtungen und Verfahren für Werkzeugmaschinen bekannt, mit denen bei einem Spannungsausfall Schäden während der Bearbeitungsfolgen verhindert werden sollen. Hierfür wird beispielsweise ein sogenannter Notrückzug realisiert, durch den das Werkzeug bzw. mehrere Werkzeuge zwangsweise aus dem eigentlichen Bearbeitungsbereich verlagert werden. Die für diese Bewegung notwendige Energie wird vorzugsweise von rotierenden Speichern bereitgestellt.

DE 199 23 047 A1 beschreibt eine diesbezügliche technische Lösung, bei der zur Steuerung einer Komponente ein Generator vorgesehen ist, der mittels der Schwungmasse einer zentralen Welle angetrieben werden kann.

In EP 0687 395 B1 wird vorgeschlagen, dass bei einem Netzausfall eine Versorgungsspannung von einem anderen Antriebsmotor für den Notrückzug genutzt wird.

Gemäß DE 101 21 323 B4 wird mittels Netzüberwachung eine Antriebsbremsfunktion oder ein Anlagenstillstand ausgelöst.

Die oben benannten technischen Lösungen sind zwar für Havariebetrieb bei Spannungsausfall geeignet, sie weisen jedoch mehrere Nachteile auf. Diesbezüglich sind beispielsweise zu nennen: die notwendige Bereitstellung von Energie, eine Anwendung von Batterien ist nicht möglich (Umgebungsbedingungen, Temperatur, Energiedichte, Leistungsabgabe) oder es sind Spindeln oder separate Motoren mit Schwungmasse erforderlich. Diese sich bewegenden (rotierenden) Komponenten unterliegen auch dem Verschleiß. Ferner treten bei der Umwandlung von elektrischer in kinetische Energie und zurück immer Verluste auf. Die zur Verfügung stehende Energie aus einem Spindelantrieb ist von der Drehzahl abhängig, welche wiederum von der Bearbeitung abhängt. Separate rotierende Energiespeicher müssen mit Masse und Volumen in die Werkzeugmaschine integriert werden und erzeugen Lärm- und Wärmebelastungen. Andererseits ist bei Bearbeitungszentren zum Beispiel während des Abwälzfräsens oder Gewindefräsens eine Energiegewinnung aus der Spindel aufgrund zu geringer Drehzahlen nicht möglich.

Schließlich schlägt DE 10 2006 019 875 B3 vor, dass trotz Ausfall der Versorgungsspannung eine unterbrechungsfreie Stromversorgung ("USV") eines Magnetlagers gewährleistet wird, indem ein elektrischer Zwischenkreis eines zweiten Umrichters genutzt wird. Solche Anlagen, bei denen eine Maschinen-USV die Energieversorgung der gesamten Maschine bei Netzausfall für eine Zeit "t" übernimmt, werden nur bei komplizierten Bearbeitungen und entsprechend häufigen Netzausfällen installiert. Derartige technische Lösungen bewirken allerdings hohe Kosten.

Der Erfindung liegt die Aufgabe zugrunde, zur Sicherstellung der Maschinenfunktionen, insbesondere einer Werkstück- und Werkzeugsicherheit bei einem Netzausfall, eine Schaltung und eine für NC-Anwendungen angepasste Steuerungsoption zu entwickeln. Dabei soll die zu entwickelnde Steuerung so lange arbeitsfähig bleiben, bis eine sichere Trennung von Werkzeug und Werkstück erreicht ist.

Diese Aufgabe wird gelöst, indem die für den Notrückzug benötigte Energie durch zusätzlich in der Maschine integrierte Kondensatoren, betrieben am Gleichstromzwischenkreis, bereitgestellt wird. Dabei wird am Gleichstromzwischenkreis von Antriebsverbänden, bestehend aus Einspeisemodul (Gleichrichter), Gleichstromzwischenkreis und Antriebsmodulen für Spindeln und Vorschubmotoren in CNC-Maschinen ein entsprechend dimensionierter Kondensator angeschlossen. Die für den Notrückzug benötigte Energie wird im Kondensator bzw. vorzugsweise in mehreren Kondensatoren gespeichert.

Zum sicheren Betrieb von Antriebsverband und Kondensator ist eine Ladeschaltung vorgesehen, die hinsichtlich der Dimension des Einspeisemoduls und des Energiebedarfs des Kondensators ausgelegt ist. Sobald der Kondensator aufgeladen ist, kann eine Direktverbindung vom Zwischenkreis zum Kondensator realisiert werden. Dazu sind entsprechende Messstellen vorgesehen. Die Weiterentwicklung der Kondensatoren, insbesondere der Doppelschichtkondensatoren, ermöglicht die vorgeschlagene Lösung. Die Ladeschaltung dient der gleichmäßigen und zeitoptimierten Ladung der Kondensatoren. Zur Überprüfung des Ladestromes sind geeignete Messwandler vorgesehen. Sind die Kondensatoren geladen, wird durch eine Änderung der Ladeschaltung die gesamte gespeicherte Energie dem Zwischenkreis zur Verfügung gestellt. Schwankungen der Zwischenkreisspannung werden nun automatisch ausgeglichen. Ferner ist für die Entladung des Zwischenkreises für Servicezwecke eine entsprechende Entladeschaltung notwendig.

Tritt ein Netzausfall ein, erkennen verschiedene Geräte den Netzausfall und melden dies schnellstmöglich der NC-Steuerung. Diese wiederum nutzt Softwareoptionen (z. B. Siemens ESR, Heidenhain Lift Fast oder dergleichen) und leitet eine entsprechende Rückzugsbewegung des Werkzeuges ein. Die Energie, welche bis zum Einleiten des Notrückzugs und für den eigentlichen Notrückzug benötigt wird, muss durch den Kondensator bereitgestellt werden. Die Dimensionierung des Kondensators erfolgt somit auf der Basis der zu bewegenden Massen und der notwendigen Rückzugswege. Ist der Kondensator modular aufgebaut, kann dieser allen Anforderungen angepasst werden.

Die Steuerung der Maschine wird über eine separate unterbrechungsfreie Stromversorgung (USV) mit Kondensatoren über längere Zeit funktionsfähig gehalten. Somit ist sichergestellt, dass auch nach Ablauf des Notrückzuges die Steuerung arbeitsfähig bleibt. Die bevorzugte Ausführung besteht darin, dass die Ladung der Kondensatoren separat erfolgt, bei Umschaltung auf maximale Energiebereitstellung bei Netzausfall zum Zwischenkreis.

Die Vorteile der Lösung bestehen darin, dass rein elektrische Energie ohne vorherige Umwandlung genutzt wird. Dadurch erfolgen keine Erwärmung, kein Verschleiß und keine Geräuschbildung, wie das bei rotierenden Speichern der Fall wäre. Die kompakte Bauweise und der modulare Aufbau ermöglichen eine kostenoptimale Integration in die Maschine. Weiterhin ist die Nachrüstung an vorhandenen Anlagen möglich.

Die Erfindung wird nachfolgend an einem bevorzugten Ausführungsbeispiel unter Bezugnahme auf die Zeichnung erläutert. Es zeigen
- Fig. 1: den Grundaufbau des Antriebsverbandes
- Fig. 2: den Zeitablauf für den Notrückzug.

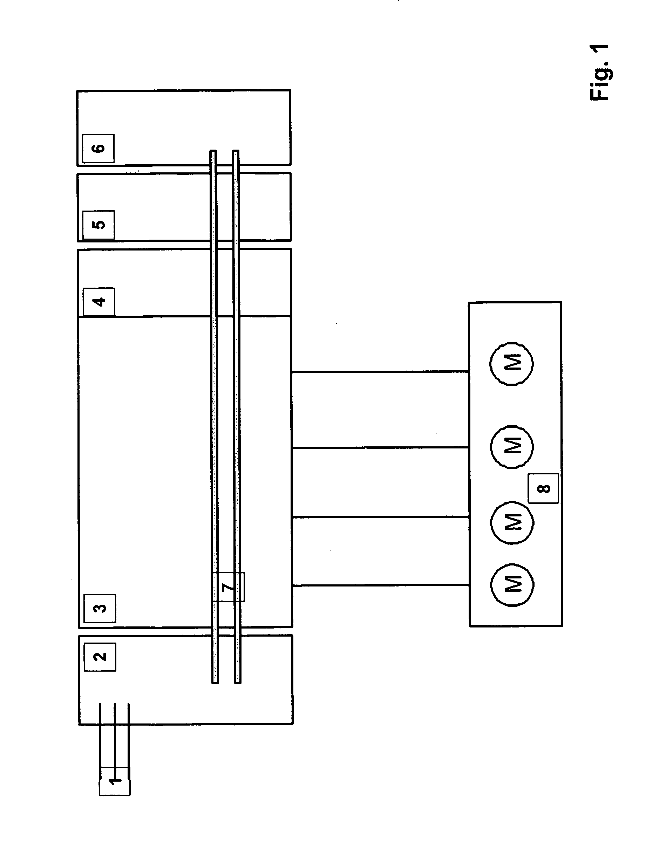

In Fig. 1 ist beispielsweise der Grundaufbau des Antriebsverbandes einer Einrichtung für ein Drehfräs- Bearbeitungszentrum mit einer Netzeinspeisung 1 mit 400 V / 50 Hz, einem Einspeisemodul 2, Motormodulen 3, einer Entladeschaltung 4, einer Ladeschaltung 5, einem Kondensator 6, einem Gleichstromzwischenkreis 7 sowie einer Spindel und Vorschubantrieben 8 dargestellt.

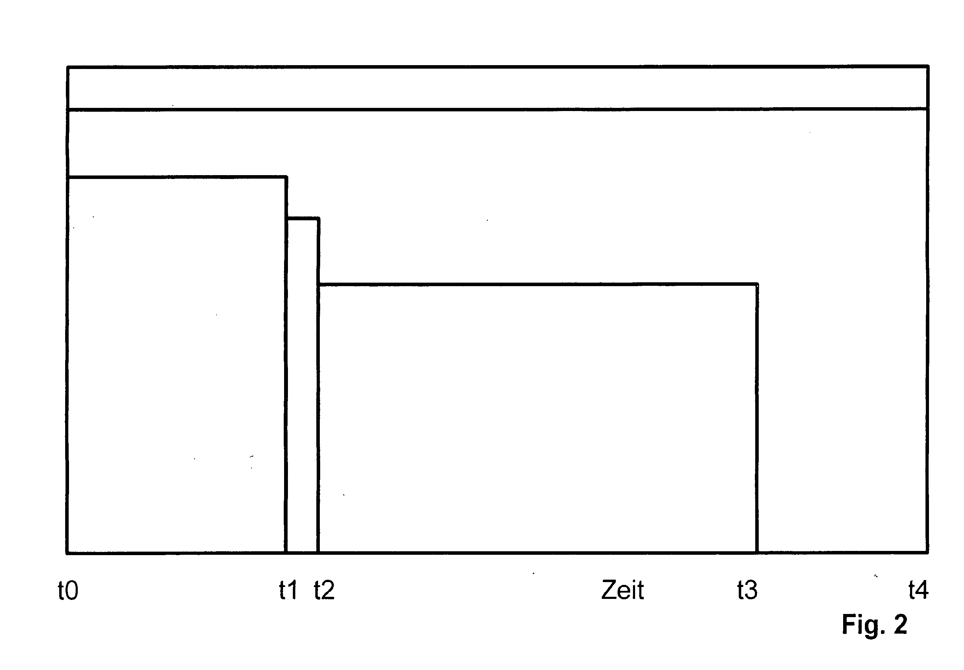

Fig. 2 veranschaulicht den zeitlichen Ablauf bei Spannungsausfall ausgehend vom Normalbetrieb über Notrückzug bis zum sicheren Stillstand der Maschine. Während des Normalbetriebs t0 - t1 der Maschine erfolgt die Bereitstellung der elektrischen Energie über die Netzeinspeisung 1.

Über diese Netzeinspeisung 1 werden alle Aggregate der Maschine mit elektrischer Energie versorgt. Im Einspeisemodul 2 des Antriebsverbandes wird der Gleichstromzwischenkreis 7 gebildet. Durch diesen Gleichstromzwischenkreis 7 werden die Motormodule 3 mit Energie versorgt. Durch die Motormodule 3 werden die Spindel- und Vorschubantriebe 8 mit Energie versorgt und in ihrer Drehzahl geregelt. Als zusätzliche Komponenten für den Notrückzug bei Spannungsausfall werden Kondensatoren 6 sowie Lade- und Entladeschaltung 4 und 5 benötigt.

Sobald der Kondensator 6 aufgeladen ist, kann eine Direktverbindung vom Zwischenkreis zum Kondensator 6 realisiert werden. Dazu sind entsprechende Messstellen in der Ladeschaltung 5 vorgesehen. Ferner ist für die Entladung des Zwischenkreises für Servicezwecke eine entsprechende Entladeschaltung 4 notwendig.

Die Ladeschaltung 5 dient der gleichmäßigen und zeitoptimierten Ladung der Kondensatoren 6. Zur Überprüfung des Ladestromes sind geeignete Messwandler vorgesehen, die nicht dargestellt sind. Sobald die Kondensatoren 6 geladen sind, wird durch eine Änderung der Ladeschaltung 5 die gesamte gespeicherte Energie dem Zwischenkreis zur Verfügung gestellt. Schwankungen der Zwischenkreisspannung werden nunmehr automatisch ausgeglichen.

Tritt ein Netzausfall bzw. ein Spannungsausfall t1 ein, erkennen verschiedene Geräte den Ausfall und melden dies schnellstmöglich der NC-Steuerung. Diese wiederum nutzt Softwareoptionen, beispielsweise Siemens ESR, Heidenhain Lift Fast oder ähnliche Varianten und leitet eine entsprechende Rückzugsbewegung t2 des Werkzeuges ein. Die Energie, welche bis zum Einleiten des Notrückzugs t2 und für den Notrückzug t2 bis t3 benötigt wird, muss durch die Kondensatoren 6 bereitgestellt werden.

Die Dimensionierung der Kondensatoren 6 erfolgt somit auf der Basis der zu bewegenden Massen und der notwendigen Rückzugswege. Ist der Kondensator 6 modular aufgebaut, kann dieser allen Anforderungen angepasst werden. Die Steuerung der Maschine wird über separate USV mit Kondensatoren 6 über längere Zeit t0 bis t4 funktionsfähig gehalten. Somit ist sichergestellt, dass auch nach Ablauf des Notrückzuges die Steuerung arbeitsfähig bleibt.

### Bezugszeichenliste

- 1: Netzeinspeisung
- 2: Einspeisemodul
- 3: Motormodule
- 4: Entladeschaltung
- 5: Ladeschaltung
- 6: Kondensator
- 7: Gleichstromzwischenkreis
- 8: Spindel und Vorschubantriebe

- t0-t1: Normalbetrieb
- t1: Spannungsabfall
- t1-t2: Reaktionszeit Steuerung
- t2: Einleiten Notrückzug
- t2-t3: Notrückzug
- t3: sichere Position erreicht
- t0-t4: Steuerung Ein- durch separate USV

## Patentansprüche

1. Einrichtung zur Schadensverhütung an Maschinen bei einem Netzausfall, insbesondere zum Schutz der Werkstücke und Werkzeuge von spanenden Werkzeugmaschinen mit Haupt- und Nebenantrieben sowie Werkzeugschlitten, bei denen die bei einem Spannungsausfall notwendige Energie von gesonderten Baugruppen erzeugt und/oder gespeichert wird,
**dadurch gekennzeichnet,**
**dass** die für den Notrückzug der Werkzeuge benötigte Energie durch zusätzlich in der Maschine integrierte Kondensatoren (6) bereitgestellt wird, wobei die Kondensatoren (6) am Gleichstromzwischenkreis (7) betrieben werden und wobei eine Ladeschaltung zur Ladung dieser Kondensatoren (6) aus dem Gleichstromzwischenkreis (7) mit einer Umschaltung auf maximale Energiebereitstellung bei Netzausfall angeordnet ist.

2. Einrichtung zur Schadensverhütung nach Anspruch **1, dadurch gekennzeichnet, dass** die Kondensatoren (6) im Steuerschrank der Maschine oder in einer separat stehenden Einheit untergebracht sind.

3. Einrichtung zur Schadensverhütung nach Anspruch **1, dadurch gekennzeichnet, dass** die Ladung der Kondensatoren (6) separat durch ein Einspeisemodul (2) und bei Erreichen der notwendigen Kapazität ein Umschalten auf maximale Energiebereitstellung bei Netzausfall zum Zwischenkreis (7) erfolgt.

4. Einrichtung zur Schadensverhütung nach Anspruch **1, dadurch gekennzeichnet, dass** eine separate Energieversorgung der NC-Steuerung mittels unterbrechungsfreier Stromversorgung (USV) und Kondensatoren (7) zur Energiespeicherung angeordnet ist.
